# DEMANDE DE BREVET EUROPEEN

(11) **EP 4 336 875 A1**
(43) Date de publication de la demande: **13.03.2024**
(21) Numéro de dépôt: 23193486.0
(22) Date de dépôt: 25.08.2023
(51) Int. Cl.: H04W 4/80, G06Q 20/16, H04W 12/47, G06Q 20/32, G06Q 20/34, H04L 9/40

(54) **DISPOSITIF DE COMMUNICATION EN CHAMP PROCHE**

(30) Priorité: 08.09.2022 FR 2208971
(71) Demandeur: STMicroelectronics (China) Investment Co., Ltd, Shanghai 200241 (CN); STMicroelectronics (Rousset) SAS, 13790 Rousset (FR)
(72) Inventeur: RIZZO, Pierre, 13530 TRETS (FR); TRICHEUR, Laurent, SHANGHAI, 200031 (CN)
(74) Mandataire: Cabinet Beaumont

(57) **Abrégé**

La présente description concerne un procédé (300) comprenant les étapes suivantes :
a) détecter (301), par un premier dispositif de communication en champ proche, la présence d'un deuxième dispositif de communication en champ proche situé à portée ;
b) initier une communication en champ proche (303) entre les premier et deuxième dispositifs ; et
c) en cas d'échec de l'initiation de la communication en champ proche, initier une transaction bancaire sans contact (307) entre les premier et deuxième dispositifs.

## Description

### Domaine technique

La présente description concerne de façon générale les dispositifs électroniques. La présente description concerne plus particulièrement les dispositifs électroniques intégrant un circuit de communication en champ proche (« Near-Field Communication » - NFC, en anglais), plus communément appelés dispositifs NFC, ainsi que les transactions bancaires sans contact mises en oeuvre par de tels dispositifs.

### Technique antérieure

Les dispositifs NFC actuels peuvent mettre en oeuvre, outre des échanges de données et d'énergie (recharge) en champ proche, des transactions bancaires sans contact avec d'autres dispositifs NFC. À la différence des échanges de données et d'énergie en champ proche, qui sont généralement initiés par un dispositif NFC dès qu'un autre dispositif NFC est détecté à portée, les transactions bancaires sans contact entre dispositifs NFC requièrent une action d'un utilisateur, par exemple le lancement d'une application bancaire sur l'un de ces dispositifs, pour que leur exécution débute. Cela rend les transactions bancaires entre dispositifs NFC peu ergonomiques.

### Résumé de l'invention

Il existe un besoin d'améliorer les dispositifs NFC actuels ainsi que les transactions bancaires sans contact mises en oeuvre par ces dispositifs.

Un mode de réalisation pallie tout ou partie des inconvénients des dispositifs NFC connus et des transactions bancaires sans contact connues entre ces dispositifs.

Pour cela, un mode de réalisation prévoit un procédé comprenant les étapes suivantes :
a) détecter, par un premier dispositif de communication en champ proche, la présence d'un deuxième dispositif de communication en champ proche situé à portée ;
b) initier une communication en champ proche entre les premier et deuxième dispositifs ; et
c) en cas d'échec de l'initiation de la communication en champ proche, initier une transaction bancaire sans contact entre les premier et deuxième dispositifs.

Selon un mode de réalisation, la transaction bancaire sans contact est initiée avant la fin d'une exécution d'un procédé de communication en champ proche entre les premier et deuxième dispositifs.

Selon un mode de réalisation, la transaction bancaire sans contact est initiée après la fin d'une exécution d'un procédé de communication en champ proche entre les premier et deuxième dispositifs.

Selon un mode de réalisation, à l'étape c), la transaction bancaire comprend un paiement sans contact.

Selon un mode de réalisation, le premier dispositif est un téléphone mobile.

Selon un mode de réalisation, le deuxième dispositif est une carte à microcircuit, de préférence une carte de paiement sans contact.

Selon un mode de réalisation, la carte de paiement sans contact est conforme à la norme ISO/IEC 14443-4.

Selon un mode de réalisation, le deuxième dispositif est un téléphone mobile ou un objet portable communicant émulant une carte à microcircuit, de préférence une carte de paiement sans contact.

Selon un mode de réalisation, à l'étape b), la communication en champ proche est effectuée selon les spécifications du NFC Forum.

Un mode de réalisation prévoit un dispositif de communication en champ proche comprenant un circuit intégré configuré pour mettre en oeuvre le procédé tel que décrit.

### Brève description des dessins

Ces caractéristiques et avantages, ainsi que d'autres, seront exposés en détail dans la description suivante de modes de réalisation et modes de mise en oeuvre particuliers faite à titre non limitatif en relation avec les figures jointes parmi lesquelles :
la figure 1 représente, de façon schématique et sous forme de blocs, un exemple de système de communication en champ proche du type auquel s'appliquent, à titre d'exemple, des modes de réalisation et modes de mise en oeuvre décrits ;
la figure 2 représente une carte à microcircuit située à proximité d'un téléphone mobile ;
la figure 3 est un logigramme illustrant un procédé comprenant des étapes de communication en champ proche et des étapes de transaction bancaire sans contact selon un mode de mise en oeuvre ;
la figure 4 est un logigramme illustrant un procédé comprenant des étapes de communication en champ proche selon un mode de mise en oeuvre ; et
la figure 5 est un logigramme illustrant un procédé comprenant des étapes de transaction bancaire sans contact selon un mode de mise en oeuvre.

### Description des modes de réalisation

De mêmes éléments ont été désignés par de mêmes références dans les différentes figures. En particulier, les éléments structurels et/ou fonctionnels communs aux différents modes de réalisation et modes de mise en oeuvre peuvent présenter les mêmes références et peuvent disposer de propriétés structurelles, dimensionnelles et matérielles identiques.

Par souci de clarté, seuls les étapes et éléments utiles à la compréhension des modes de réalisation et modes de mise en oeuvre décrits ont été représentés et sont détaillés. En particulier, la génération des signaux radiofréquence et leur interprétation n'ont pas été détaillées, les modes de réalisation et modes de mise en oeuvre décrits étant compatibles avec les techniques usuelles de génération et d'interprétation de ces signaux.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais « coupled ») entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes « avant », « arrière », « haut », « bas », « gauche », « droite », etc., ou relative, tels que les termes « dessus », « dessous », « supérieur », « inférieur », etc., ou à des qualificatifs d'orientation, tels que les termes « horizontal », « vertical », etc., il est fait référence sauf précision contraire à l'orientation des figures.

Sauf précision contraire, les expressions « environ », « approximativement », « sensiblement », et « de l'ordre de » signifient à 10 % près, de préférence à 5 % près.

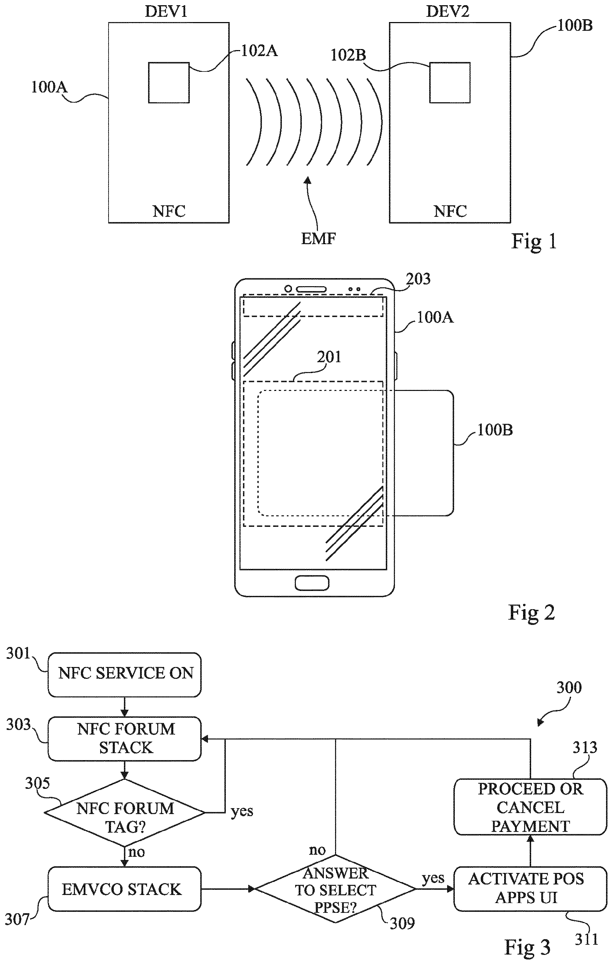

La figure 1 représente, de façon schématique et sous forme de blocs, un exemple de système de communication en champ proche du type auquel s'appliquent, à titre d'exemple, des modes de réalisation et modes de mise en oeuvre décrits.

La figure 1 illustre très schématiquement le cas de deux dispositifs électroniques similaires, par exemple deux téléphones mobiles, mais ce qui est décrit s'applique plus généralement à tout système dans lequel un lecteur, une borne ou un terminal rayonne un champ électromagnétique susceptible d'être capté par un transpondeur, par exemple une étiquette électronique (« tag », en anglais), une carte à microcircuit (« IC card », en anglais), un dispositif plus évolué (par exemple un téléphone), etc. Pour simplifier, on fera référence à des dispositifs NFC pour désigner des dispositifs intégrant au moins un circuit de communication en champ proche (« Near-Field Communication » - NFC, en anglais).

Dans l'exemple représenté, un premier dispositif NFC 100A (DEV1) est susceptible de communiquer, par couplage électromagnétique en champ proche, avec un deuxième dispositif NFC 100B (DEV2). Selon les applications, pour une communication, l'un des dispositifs NFC 100A, 100B fonctionne en mode dit lecteur (« reader mode », en anglais) tandis que l'autre dispositif NFC 100B, 100A fonctionne en mode dit carte (« card émulation mode », en anglais), ou les deux dispositifs NFC 100A et 100B communiquent en mode dit poste à poste (« Peer-to-Peer » - P2P, en anglais).

Chaque dispositif NFC 100A, 100B intègre un circuit de communication en champ proche symbolisé, en figure 1, par un bloc 102A, 102B. Les circuits 102A et 102B de communication en champ proche comportent chacun divers éléments ou circuits électroniques de génération ou de détection d'un signal radiofréquence à l'aide d'une antenne (non représentée), par exemple des circuits de modulation ou de démodulation. Lors d'une communication entre les dispositifs NFC 100A et 100B, le signal radiofréquence généré par l'un des dispositifs NFC 100A, 100B est capté par l'autre dispositif NFC 100B, 100A se trouvant à portée.

En figure 1, on suppose arbitrairement que le premier dispositif NFC 100A émet un champ électromagnétique (EMF) capté par le deuxième dispositif NFC 100B à portée. Il se forme alors un couplage entre deux circuits oscillants, en l'espèce celui de l'antenne du premier dispositif NFC 100A et celui de l'antenne du deuxième dispositif NFC 100B. Ce couplage se traduit par une variation de la charge constituée par les circuits du dispositif NFC 100B sur le circuit oscillant de génération du champ EMF du dispositif NFC 100A.

En pratique, pour établir une communication, une variation de phase ou d'amplitude du champ émis est détectée par le dispositif 100A, qui entame alors un protocole de communication NFC avec le dispositif 100B. Côté dispositif NFC 100A, on détecte en pratique si l'amplitude de la tension aux bornes du circuit oscillant et/ou le déphasage par rapport au signal généré par le circuit 102A sortent de plages (ou fenêtres) d'amplitudes et/ou de phases délimitées chacune par des seuils.

Une fois que le dispositif NFC 100A a détecté la présence du dispositif NFC 100B dans son champ, il entame une procédure d'établissement de communication mettant en oeuvre des émissions de requêtes par le dispositif NFC 100A et de réponses par le dispositif NFC 100B (séquence d'interrogation telle que définie dans les spécifications techniques du NFC Forum). Les circuits du dispositif NFC 100B, s'ils étaient en mode veille, sont alors réactivés.

Lorsqu'un dispositif NFC n'est pas en cours de communication, il peut être commuté en mode dit basse consommation (« low power », en anglais), ou mode veille, afin de réduire l'énergie consommée. Cela est en particulier le cas pour les dispositifs NFC alimentés par batteries. Dans le mode basse consommation, un dispositif NFC configuré en mode lecteur exécute un mode dit de détection de carte (« Low Power Card Détection » - LPCD, en anglais) également appelé mode de détection d'étiquette ou de tag (« Low Power Tag Détection » - LPTD, en anglais), dans lequel il effectue des boucles de détection d'un autre dispositif se trouvant dans son champ (à portée) afin de sortir d'un mode veille à des fins de communication.

La détection est analogue à celle opérée lorsque le dispositif n'est pas en mode basse consommation. Toutefois, en mode normal, l'émission de la porteuse (du champ) est continue et inclut périodiquement des trames d'interrogation tandis que, en mode veille, l'émission du champ s'effectue par salves (« burst », en anglais) périodiques et sans trame d'interrogation afin de réduire la consommation. Les salves sont d'une durée nettement inférieure (dans un rapport d'au moins dix, de préférence d'au moins cent) à la durée d'une requête d'interrogation d'une carte en mode normal.

Des applications visent par exemple à tirer profit du champ EMF pour mettre en oeuvre des échanges de données entre les dispositifs NFC 100A et 100B.

D'autres applications visent par exemple plutôt à tirer profit du champ EMF pour mettre en oeuvre des échanges d'énergie entre les dispositifs NFC 100A et 100B. De façon générale, cela correspond par exemple à un cas où le dispositif 100B dispose d'une source d'énergie électrique (non représentée), par exemple une batterie, susceptible d'être rechargée par le dispositif NFC 100A. Cela correspond par exemple plus précisément à un cas où le dispositif NFC 100A est un terminal mobile, par exemple un téléphone portable ou une tablette tactile, et où le dispositif NFC 100B est un objet connecté, par exemple une montre connectée, un bracelet connecté, une paire d'écouteurs sans fil, un stylo numérique, etc. Dans ce cas, le dispositif NFC 100A dispose par exemple d'une batterie de capacité supérieure à celle du dispositif NFC 100B.

D'autres applications encore visent par exemple à tirer profit du champ EMF pour mettre en oeuvre des transactions bancaires sans contact entre dispositifs NFC. Cela correspond par exemple à un cas où le dispositif NFC 100A est un terminal mobile, par exemple un téléphone portable, et où le dispositif NFC 100B est une carte à microcircuit.

Toutes les applications ci-dessus peuvent être mises en oeuvre tour à tour par un même dispositif NFC. Un téléphone mobile peut par exemple, selon le cas d'utilisation, échanger des données en champ proche avec un autre téléphone, recharger en champ proche une batterie d'une montre connectée ou effectuer une transaction bancaire avec une carte de paiement sans contact.

La figure 2 représente un cas où le dispositif NFC 100A est un téléphone mobile, par exemple un téléphone mobile intelligent ou smartphone, et où le dispositif NFC 100B est une carte à microcircuit, par exemple une carte bancaire de paiement sans contact, située à portée du dispositif NFC 100A.

Dans l'exemple représenté, la carte à microcircuit 100B est disposée en regard d'une antenne 201 de communication en champ proche du téléphone mobile 100A, par exemple une antenne sensiblement centrée par rapport à une face arrière du téléphone mobile 100A. À titre d'exemple, l'antenne 201 du téléphone 100A est destinée à la recharge en champ proche d'autres dispositifs NFC. Dans l'exemple illustré en figure 2, la face supérieure de la carte 100B est placée en contact avec la face arrière du téléphone 100A. La carte 100B est par exemple sensiblement centrée par rapport à la face arrière du téléphone 100A, de sorte à permettre un couplage optimal entre l'antenne 201 et une antenne (non représentée) de la carte 100B.

À titre de variante, la carte 100B peut être placée en regard d'une autre antenne 203 de communication en champ proche du téléphone 100A, par exemple une antenne située dans la partie supérieure du téléphone 100A. À titre d'exemple, l'antenne 203 du téléphone 100A est destinée à des échanges de données avec d'autres dispositifs NFC. La face supérieure de la carte 100B est alors par exemple placée en contact avec le haut de la face arrière du téléphone 100A, de sorte à permettre un couplage optimal entre l'antenne 203 du téléphone 100A et l'antenne de la carte 100B.

En pratique, lorsque la carte de paiement 100B est approchée du téléphone 100A, le téléphone 100A détecte par exemple la présence de la carte 100B et active le circuit 102A pour initier une communication en champ proche avec la carte 100B. Toutefois, dans le cas illustré en figure 2 où la carte 100B est une carte de paiement sans contact, la carte 100B n'est pas reconnue de façon automatique par le téléphone 100A. À titre d'exemple, une action supplémentaire est requise de la part d'un utilisateur du téléphone 100A, par exemple le lancement d'une application de paiement sur le téléphone 100A, pour qu'une transaction bancaire sans contact puisse être initiée entre le téléphone 100A et la carte 100B. Cela rend l'utilisation du téléphone 100A et de la carte 100B peu intuitive et peu ergonomique pour l'utilisateur.

La figure 3 est un logigramme illustrant un procédé 300 comprenant des étapes de communication en champ proche et des étapes de transaction bancaire sans contact selon un mode de mise en oeuvre. Le procédé de la figure 3 est par exemple mis en oeuvre par les dispositifs NFC 100A et 100B de la figure 1.

Le procédé illustré en figure 3 comprend une étape 301 (NFC SERVICE ON) d'activation du circuit de communication en champ proche 102A du dispositif NFC 100A, par exemple suite à une détection du dispositif NFC 100B à portée comme exposé précédemment en relation avec la figure 1. Cela correspond par exemple plus précisément à une situation dans laquelle le dispositif NFC 100B est approché de l'antenne du dispositif NFC 100A. La présence du dispositif NFC 100B à portée du dispositif NFC 100A est alors détectée par le circuit de communication en champ proche 102A du dispositif NFC 100A.

Lors d'une autre étape 303 (NFC FORUM STACK) postérieure à l'étape 301, une communication en champ proche entre le dispositif NFC 100A et le dispositif NFC 100B est initiée par le dispositif NFC 100A.

Lors d'encore une autre étape 305 (NFC FORUM TAG?) postérieure à l'étape 303, le dispositif NFC 100A vérifie si le dispositif NFC 100B préalablement détecté à portée est conforme aux spécifications techniques du NFC Forum. Si tel est le cas (sortie « yes » du bloc 305), la communication en champ proche initiée par le dispositif NFC 100A se poursuit par exemple avec des échanges (non détaillés) de trames de données entre les dispositifs NFC 100A et 100B. Cela correspond par exemple à un cas où le dispositif NFC 100A est un téléphone mobile et où le dispositif NFC 100B est une étiquette radiofréquence. Dans l'exemple représenté, on revient à l'étape 303 et le dispositif NFC 100A est maintenu dans un mode de communication en champ proche.

En revanche, dans un cas où le dispositif NFC 100A détecte que le dispositif NFC 100B ne répond pas aux spécifications du NFC Forum (sortie « no » du bloc 305), la communication en champ proche est considérée comme ayant échoué. Cela se produit par exemple lorsque le dispositif NFC 100B ne prend pas en charge le format d'échange de données NFC (« NFC Data Exchange Format » - NDEF, en anglais) tel que défini dans les spécifications du NFC Forum. Dans ce cas, lors d'encore une autre étape 307 (EMVCO STACK) postérieure à l'étape 305, le dispositif NFC 100A initie une transaction bancaire sans contact, par exemple un paiement sans contact, avec le dispositif NFC 100B.

Lors d'encore une autre étape 309 (ANSWER TO SELECT PPSE?) postérieure à l'étape 307, le dispositif NFC 100A détecte si le dispositif NFC 100B situé à portée est une carte de paiement sans contact. Si tel est le cas (sortie « yes » du bloc 309), le dispositif NFC 100A lance, lors d'encore une autre étape 311 (ACTIVATE POS UI) postérieure à l'étape 309, une application, par exemple une application bancaire de paiement sans contact. Cela correspond par exemple au cas de la figure 2, où le dispositif NFC 100A est un téléphone mobile et où le dispositif NFC 100B est une carte de paiement sans contact ou un téléphone mobile configuré en tant que moyen de paiement sans contact, par exemple un smartphone émulant une carte bancaire de paiement sans contact. À titre de variante, le dispositif NFC 100B peut être choisi parmi tout type d'objet portable communicant tel qu'une montre intelligente, un bracelet connecté, un téléphone mobile, etc. émulant une carte bancaire de paiement sans contact.

En revanche, si le dispositif NFC 100A détecte que le dispositif NFC 100B n'est pas une carte de paiement sans contact (sortie « no » du bloc 309), la transaction bancaire est considérée comme ayant échoué. Dans l'exemple représenté, on revient alors à l'étape 303 et le dispositif NFC 100A est ramené dans un mode de communication en champ proche.

Dans le cas où le dispositif NFC 100B préalablement détecté à portée est une carte de paiement sans contact, la transaction bancaire est effectuée lors d'encore une autre étape 313 (PROCEED OR CANCEL PAYMENT) postérieure à l'étape 311. Plus précisément, des fonds sont par exemple transférés depuis un compte associé au dispositif NFC 100B vers un autre compte associé au dispositif NFC 100A. À titre de variante, la transaction bancaire peut être annulée, par exemple en raison d'un solde insuffisant sur le compte associé au dispositif NFC 100B. Dans l'exemple représenté, on revient ensuite à l'étape 303 et le dispositif NFC 100A est ramené dans un mode de communication en champ proche.

Bien que cela n'ait pas été illustré en figure 3, on peut prévoir que le circuit de communication en champ proche du dispositif NFC 100A soit mis en veille ou désactivé après un délai d'inactivité. À titre d'exemple, on peut prévoir une commutation en mode basse consommation si le dispositif NFC 100A demeure pendant plusieurs dizaines de secondes à l'étape 303 sans échanger de données ou si le dispositif NFC 100A détecte que le dispositif NFC 100B n'est plus présent à portée.

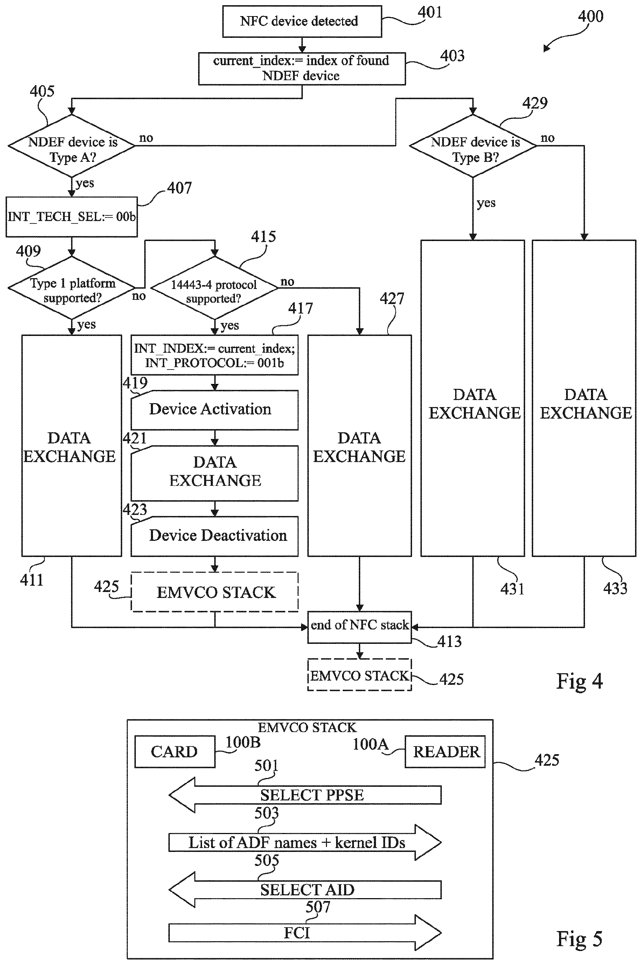

La figure 4 est un logigramme illustrant un procédé 400 comprenant des étapes de communication en champ proche selon un mode de mise en oeuvre. Plus précisément, la figure 4 illustre de façon plus détaillée des exemples d'étapes correspondant par exemple aux étapes 301, 303, 305 et 307 précédemment exposées en relation avec la figure 3.

Lors d'une étape 401 (NFC device detected), un premier dispositif de communication en champ proche, par exemple le dispositif NFC 100A, détecte la présence d'un deuxième dispositif de communication en champ proche, par exemple le dispositif NFC 100B, situé à portée.

Lors d'une autre étape 403 (current index:= index of found NDEF device) postérieure à l'étape 401, un indicateur associé au dispositif NFC 100B est affecté à une variable notée current_index.

Lors d'encore une autre étape 405 (NDEF device is Type A?) postérieure à l'étape 403, le dispositif NFC 100A détecte si le dispositif NFC 100B est un dispositif NFC de type A, c'est-à-dire un dispositif conforme à la norme ISO/IEC 14443A. Si tel est le cas (sortie « yes » du bloc 405), le dispositif NFC 100A affecte alors une valeur hexadécimale 00b à une variable INT_TECH_SEL lors d'encore une autre étape 407 (INT_TECH_SEL:= 00b) postérieure à l'étape 405.

Lors d'encore une autre étape 409 (Type 1 Platform supported?) postérieure à l'étape 407, le dispositif NFC 100A détecte si le dispositif NFC 100B est un dispositif NFC de type 1. Si tel est le cas (sortie « yes » du bloc 409), des étapes de communication en champ proche entre le dispositif NFC 100A et le dispositif NFC 100B sont alors mises en oeuvre. Ces étapes, qui peuvent par exemple comprendre des opérations d'échanges de trames de données, sont symbolisées en figure 4 par un unique bloc fonctionnel 411 (DATA EXCHANGE).

Lors d'encore une autre étape 413 (end of NFC stack) postérieure à l'étape 411, la communication en champ proche entre les dispositifs NFC 100A et 100B prend fin.

Dans un cas où, lors de l'étape 409, le dispositif NFC 100A détermine que le dispositif NFC 100B n'est pas de type 1 (sortie « no » du bloc 409), le dispositif NFC 100A détecte alors, lors d'encore une autre étape 415 (14443-4 protocol supported?) postérieure à l'étape 409, si le dispositif NFC 100B supporte le protocole de communication défini par la norme ISO/IEC 14443-4. Si tel est le cas (sortie « yes » du bloc 415), le dispositif NFC 100A affecte alors la valeur de la variable current_index à une variable INT_INDEX lors d'encore une autre étape 417 (INT_INDEX:= current_index ; INT_PROTOCOL:= 001b) postérieure à l'étape 415. En outre, le dispositif NFC 100A affecte une valeur hexadécimale 001b à une variable INT_PROTOCOL lors de l'étape 417.

Lors d'encore une autre étape 419 (Device Activation) postérieure à l'étape 417, le dispositif NFC 100A est activé pour initier un échange de données avec le dispositif NFC 100B.

Lors d'encore une autre étape 421 (DATA EXCHANGE) postérieure à l'étape 419, des données peuvent être échangées entre les dispositifs NFC 100A et 100B. Cela correspond par exemple à un cas où les dispositifs NFC 100A et 100B sont respectivement un téléphone et une étiquette radiofréquence. Dans un cas où le dispositif NFC 100B est une carte de paiement sans contact, le dispositif NFC 100B n'est par exemple pas reconnu par le dispositif NFC 100A lors de l'étape 421.

Lors d'encore une autre étape 423 (Device Deactivation) postérieure à l'étape 421, le dispositif NFC 100A est désactivé pour permettre de terminer l'échange de données avec le dispositif NFC 100B ou de sortir du mode d'échange de données dans un cas où le dispositif NFC 100B n'est pas reconnu par le dispositif NFC 100A.

Lors d'encore une autre étape 425 (EMVCO STACK) postérieure à l'étape 423, le dispositif NFC 100A initie une transaction bancaire sans contact avec le dispositif NFC 100B. Cela correspond par exemple au cas où le dispositif NFC 100B est une carte de paiement sans contact non reconnue par le dispositif NFC 100A lors de l'étape 423. Dans ce cas, la transaction bancaire sans contact est donc initiée avant la fin de l'exécution du procédé de communication en champ proche entre les dispositifs NFC 100A et 100B.

Dans un cas où, lors de l'étape 415, le dispositif NFC 100A détecte que le dispositif NFC 100B ne supporte pas le protocole de communication défini par la norme ISO/IEC 14443-4 (sortie « no » du bloc 415), des étapes de communication en champ proche entre les dispositifs NFC 100A et 100B sont alors mises en oeuvre. Ces étapes, qui peuvent par exemple comprendre des opérations d'échanges de trames de données, sont symbolisées en figure 4 par un unique bloc fonctionnel 427 (DATA EXCHANGE). Dans ce cas, le dispositif NFC 100A considère par exemple que le dispositif NFC 100B est un dispositif NFC de type 2.

Une fois les échanges de données terminés, la communication en champ proche prend fin lors de l'étape 413.

Dans un cas où, lors de l'étape 405, le dispositif NFC 100A détecte que le dispositif NFC 100B n'est pas de type A (sortie « no » du bloc 405), le dispositif NFC 100A détecte si le dispositif NFC 100B est un dispositif NFC de type B, c'est-à-dire un dispositif conforme à la norme ISO/IEC 14443B. Si tel est le cas (sortie « yes » du bloc 429), des étapes de communication en champ proche entre les dispositifs NFC 100A et 100B sont alors mises en oeuvre. Ces étapes sont symbolisées en figure 4 par un unique bloc fonctionnel 431 (DATA EXCHANGE) .

Une fois les échanges de données terminés, la communication en champ proche prend fin lors de l'étape 413.

Dans un cas où, lors de l'étape 429, le dispositif NFC 100A détecte que le dispositif NFC 100B n'est pas de type A (sortie « no » du bloc 429), le dispositif NFC 100A estime que le dispositif NFC 100B est un dispositif NFC de type F, c'est-à-dire un dispositif conforme à la norme FeliCa JIS X6319-4. Des étapes de communication en champ proche entre les dispositifs NFC 100A et 100B sont alors mises en oeuvre. Ces étapes sont symbolisées en figure 4 par un unique bloc fonctionnel 433 (DATA EXCHANGE).

Une fois les échanges de données terminés, la communication en champ proche prend fin lors de l'étape 413.

À titre de variante, l'étape 425 d'initiation de la transaction bancaire par le dispositif NFC 100A peut être mise en oeuvre postérieurement à l'étape 413. Dans ce cas, la transaction bancaire sans contact est initiée après la fin de l'exécution du procédé de communication en champ proche entre les dispositifs NFC 100A et 100B.

La figure 5 est un logigramme illustrant un procédé comprenant des étapes de transaction bancaire sans contact selon un mode de mise en oeuvre. Plus précisément, la figure 5 illustre de façon plus détaillée des exemples d'opérations exécutées par exemple par les dispositifs NFC 100A et 100B durant l'étape 425 (EMVCO STACK). On suppose arbitrairement que les dispositifs NFC 100A et 100B sont respectivement un téléphone mobile et une carte de paiement sans contact.

Dans l'exemple représenté, le dispositif NFC 100A (READER) configuré en mode lecteur transmet, au dispositif NFC 100B (CARD) configuré en mode carte, une requête (flèche 501, SELECT PPSE) visant à activer un environnement de système de paiement de proximité (« Proximity Payment System Environment » - PPSE, en anglais). Cette requête permet par exemple d'obtenir, grâce à une seule commande, des marques et applications disponibles sur le dispositif NFC 100B et d'effectuer un choix en fonction d'une priorité et d'une disponibilité d'un logiciel système opérationnel, ou noyau, pouvant être exécuté par le dispositif NFC 100B.

En réponse (flèche 503, List of ADF names + kernel IDs), le dispositif NFC 100B transmet au dispositif NFC 100A une ou plusieurs données relatives par exemple à une liste de produits supportés par le dispositif NFC 100B, aux noyaux exécutables par le dispositif NFC 100B, et à des niveaux de priorité de ces noyaux les uns par rapport aux autres. À titre d'exemple, ces données sont des données dites d'information de contrôle de fichiers (« File Control Information » - FCI, en anglais).

Le dispositif NFC 100A traite ensuite les données transmises par le dispositif NFC 100B, par exemple afin de comparer des noms de fichiers de définition d'application (« Application Définition File » - ADF, en anglais) et des identifiants de noyaux par rapport à un ensemble de combinaisons d'identifiants d'application (« Application Identifier » - AID, en anglais) et de noyaux spécifiques aux types d'applications que le dispositif NFC 100A est capable de prendre en charge pour un type de transaction donnée. Il en résulte par exemple une liste de combinaisons, classées par ordre de priorité ou, pour des correspondances de priorité égale, par ordre dans la liste de données d'information de contrôle de fichiers.

En réponse (flèche 505, SELECT AID), le dispositif NFC 100A sélectionne la combinaison présentant la priorité la plus élevée et transmet l'identifiant d'application de cette combinaison au dispositif NFC 100B. L'identifiant est ensuite par exemple traité par le noyau du dispositif NFC 100B.

Lors d'encore une autre étape (flèche 507, FCI), le dispositif NFC 100B transmet par exemple au dispositif NFC 100A des données d'information de contrôle de fichiers.

Bien que cela n'ait pas été détaillé en figure 5, d'autres opérations liées à la transaction bancaire sans contact entre les dispositifs NFC 100A et 100B peuvent ensuite être exécutées. À titre d'exemple, une application bancaire peut être lancée sur le dispositif NFC 100A, sans action de la part d'un utilisateur de ce dispositif, afin d'effectuer un paiement sans contact.

De manière générale, la mise en oeuvre de l'étape 425 est par exemple conforme à la spécification « EMV Contactless Spécifications for Payment Systems ».

Un avantage des procédés décrits ci-dessus en relation avec les figures 3 à 5 tient au fait qu'ils permettent d'initier une transaction bancaire sans contact entre les dispositifs NFC 100A et 100B en cas d'échec d'une communication en champ proche initiée par le dispositif NFC 100A. Cela permet notamment de réduire le nombre d'actions requises de la part de l'opérateur.

Divers modes de réalisation, modes de mise en oeuvre et variantes ont été décrits. La personne du métier comprendra que certaines caractéristiques de ces divers modes de réalisation, modes de mise en oeuvre et variantes pourraient être combinées, et d'autres variantes apparaîtront à la personne du métier. En particulier, bien que l'on ait décrit ci-dessus des exemples d'application à des transactions bancaires entre un téléphone mobile et une carte de paiement sans contact, les modes de réalisation et modes de mise en oeuvre décrits s'appliquent à tous types de dispositifs NFC capables de mettre en oeuvre une transaction bancaire sans contact.

Enfin, la mise en oeuvre pratique des modes de réalisation, modes de mise en oeuvre et variantes décrits est à la portée de la personne du métier à partir des indications fonctionnelles données ci-dessus. En particulier, la mise en oeuvre pratique de la transaction bancaire sans contact entre les dispositifs NFC 100A et 100B, conduisant par exemple à un transfert de fonds depuis un compte bancaire associé au dispositif NFC 100B vers un autre compte bancaire associé au dispositif NFC 100A, est à la portée de la personne du métier à partir des indications ci-dessus.

## Revendications

1. Procédé (300 ; 400) comprenant les étapes suivantes :
a) détecter (301 ; 401), par un premier dispositif (100A) de communication en champ proche, la présence d'un deuxième dispositif (100B) de communication en champ proche situé à portée ;
b) initier une communication en champ proche (303 ; 421) entre les premier et deuxième dispositifs ; et
c) en cas d'échec de l'initiation de la communication en champ proche, initier une transaction bancaire sans contact (307 ; 425) entre les premier et deuxième dispositifs.

2. Procédé selon la revendication 1, dans lequel la transaction bancaire sans contact (307 ; 425) est initiée avant la fin d'une exécution d'un procédé de communication en champ proche entre les premier et deuxième dispositifs (100A, 100B).

3. Procédé selon la revendication 1, dans lequel la transaction bancaire sans contact (307 ; 425) est initiée après la fin d'une exécution d'un procédé de communication en champ proche entre les premier et deuxième dispositifs (100A, 100B).

4. Procédé selon l'une quelconque des revendications 1 à 3, dans lequel, à l'étape c), la transaction bancaire (307 ; 425) comprend un paiement sans contact.

5. Procédé selon l'une quelconque des revendications 1 à 4, dans lequel le premier dispositif (100A) est un téléphone mobile.

6. Procédé selon l'une quelconque des revendications 1 à 5, dans lequel le deuxième dispositif (100B) est une carte à microcircuit, de préférence une carte de paiement sans contact.

7. Procédé selon la revendication 6, dans lequel la carte de paiement sans contact (100B) est conforme à la norme ISO/IEC 14443-4.

8. Procédé selon l'une quelconque des revendications 1 à 5, dans lequel le deuxième dispositif (100B) est un téléphone mobile ou un objet portable communicant émulant une carte à microcircuit, de préférence une carte de paiement sans contact.

9. Procédé selon l'une quelconque des revendications 1 à 8, dans lequel, à l'étape b), la communication en champ proche est effectuée selon les spécifications du NFC Forum.

10. Dispositif (100A) de communication en champ proche comprenant un circuit intégré (102A) configuré pour mettre en oeuvre le procédé (300 ; 400) selon l'une quelconque des revendications 1 à 9.
